# DEMANDE DE BREVET EUROPEEN

(11) **EP 2 442 142 A1**
(43) Date de publication de la demande: **18.04.2012**
(21) Numéro de dépôt: 11184928.7
(22) Date de dépôt: 12.10.2011
(51) Int. Cl.: G02B 5/00, G01N 21/55, G02B 1/10, B82Y 20/00, B82Y 15/00, B32B 15/00

(54) **Structure multicouche comprenant un métal précieux accroché sur un substrat diélectrique, procédé et utilisation associés**

(30) Priorité: 12.10.2010 FR 1058263
(71) Demandeur: Université de Technologie de Troyes, 10010 Troyes Cédex (FR)
(72) Inventeur: Toury, Timothée, 10190 Prugny (FR); Lamy de la Chapelle, Marc, 94120 Fontenay sous Bois (FR); Shen, Hong, 10010 Troyes Cedex (FR); Guelorget, Bruno, 10800 Bucheres (FR)
(74) Mandataire: Thomas, Nadine

(57) **Abrégé**

L'invention a trait à une structure multicouche comprenant -un substrat diélectrique (1), -une couche d'accroche (4) qui s'étend sur une première face du substrat diélectrique (1) -au moins une couche de métal précieux (3,31) placée sur la couche d'accroche (4), ladite couche d'accroche (4) comprenant un dérivé d'un composé alkylsilane caractérisée en ce que la couche de métal précieux est mise en place par évaporation ou par pulvérisation dudit métal précieux. L'invention a également trait à un procédé de fabrication d'un tel dispositif basé soit sur une lithographie à faisceau électronique, à insolation optique ou à nanoimpression.

## Description

### DOMAINE TECHNIQUE DE L'INVENTION

L'invention se rapporte au domaine de la plasmonique et plus précisément à des structures multicouches telles que des lames de verre sur lesquelles sont accrochées ou déposées des nanoparticules de métal précieux. Ces dispositifs sont notamment utilisés comme capteurs d'espèces chimiques ou biologiques. L'invention se rapporte également aux procédés de fabrication de tels dispositifs basés essentiellement sur la nanolithographie.

A l'heure actuelle, sont proposés de nombreux procédés de fabrication de structures multicouches comprenant une couche de métal précieux. Ces procédés et dispositifs ne sont cependant pas satisfaisants.

### ETAT DE LA TECHNIQUE ANTERIEURE

On connaît de la demande de brevet US 2008/160287, une structure comprenant un substrat de verre sur lequel sont fixées des nanoparticules métalliques allongées disposées le long du substrat à un intervalle constant sans couche d'accroche. Cette structure métallique n'est cependant pas satisfaisante dans le cas de nanoparticules d'or, car de telles nanoparticules n'offrent pas une adhésion satisfaisante avec le verre.

La demande de brevet mentionnée précédemment, divulgue en outre un procédé de fabrication dans lequel est insérée une couche d'accroche de chrome entre le substrat de verre et les nanoparticules. Cette structure ne s'avère pas suffisamment intéressante car les propriétés optiques de ce type de structure sont altérées : ceci s'explique notamment par une absorption très forte de la structure multicouche en raison de la présence de la couche de chrome qui confère un indice très fort et atténue la résonance plasmon.

### EXPOSE DE L'INVENTION

L'invention vise à remédier aux inconvénients de l'état de la technique et notamment à proposer une structure multicouche ayant à la fois des propriétés mécaniques et optiques améliorées par rapport à l'état de la technique.

Pour ce faire est proposé une structure multicouche comprenant -un substrat diélectrique -une couche d'accroche qui s'étend sur une première face du substrat diélectrique -au moins une couche de métal précieux placée sur la couche d'accroche, ladite couche d'accroche comprenant un dérivé d'un composé alkylsilane de formule (I)

(I) (RO)ₐ-Si-((CH2)_{c}-(XHₑ))_{b}

dans laquelle R est CH3, C2H5 ou C3H7, a vaut 2 ou 3, b vaut 4-a, c vaut de 1 à 6, e vaut 1 ou 2 et X est S ou N, , la couche de métal précieux étant mise en place par évaporation ou par pulvérisation dudit métal précieux en tant que métallisation.

Selon un premier aspect, la couche de métal précieux est constituée de nanoparticules qui présentent une forme et/ou un agencement et/ou une orientation déterminés. Par exemple, les nanoparticules peuvent représenter un motif déterminé régulier ou non.

Selon un autre aspect, la couche de métal précieux est constituée de nanoparticules qui représentent un motif ou un dessin.

Préférentiellement, le substrat diélectrique comprend essentiellement du verre.

L'évaporation de la couche de métal précieux permet d'obtenir une structure multicouche comprenant une couche de métal précieux qui mesure préférentiellement de 1 à 100 nm d'épaisseur. Un exemple de pulvérisation est la pulvérisation cathodique.

Par « structure multicouche » on entend un ensemble de couches associées à au moins une face d'un substrat diélectrique. La structure multicouche obtenue présente des propriétés mécaniques et/ou optiques améliorées par rapport au substrat diélectrique de base. Un exemple de structure multicouche est une lame de verre recouverte de nanoparticules d'or. Ce type de dispositif est utilisé notamment pour réaliser des analyses d'extraits chimiques ou biologiques par méthode optique.

Par « substrat diélectrique » on entend tout matériau solide transparent ou opaque à la lumière visible, aux Ultra Violets ou aux Infra Rouges. Ce matériau comprend avantageusement des atomes de silicium ou des groupements d'oxyde de silicium. De manière générale, le substrat diélectrique peut consister en un verre minéral (silicosodocalcique, borosilicate, vitrocéramique etc) ou un verre organique (polymère thermoplastique tel qu'un polyuréthane ou un polycarbonate) ou tout autre matériau diélectrique.

Par «composé alkylsilane » on entend une molécule organique comprenant des groupements alkyles d'au moins un atome de carbone greffé soit directement sur un silicium, soit par l'intermédiaire d'un atome d'oxygène ou d'azote. Le composé alkylsilane peut être sous une forme « dérivée » c'est-à-dire qu'il perd certains groupements chimiques lorsqu'il entre dans la composition de la structure multicouche.

Pour l'interprétation de la présente invention, l'expression « métal précieux » désigne tout type de métal pouvant se lier de manière covalente à une fonction thiol ou amino d'un groupement mercaptoalkyle ou aminoalkyle. Cette expression désigne par exemple le platine, le palladium, l'or, l'argent, le cuivre ou l'aluminium.

Avantageusement, la couche d'accroche et la couche de métal précieux s'étendent l'une et/ou l'autre sur tout ou partie de la première face du substrat diélectrique.

La couche de métal précieux peut aussi être constituée d'un film accroché sur toute la surface du substrat diélectrique.

Par « nanoparticules » d'un métal, on entend des structures composées essentiellement de métal, et mesurant de préférence entre un nanomètre et plusieurs centaines de micromètres. Les dimensions de la couche de métal précieux sont fixées par le choix du substrat diélectrique et par les conditions de l'évaporation ou pulvérisation du métal précieux mise en oeuvre lors de la fabrication de la structure multicouche.

Avantageusement, le composé alkylsilane est le 3-mercaptopropyltrimethoxysilane (désigné ici sous le sigle MPTMS).

Préférentiellement, le métal précieux de la structure multicouche est l'or ou l'argent.

L'invention a également pour objet un procédé de fabrication d'une structure multicouche telle que celle mentionnée précédemment, comprenant une étape de dépôt d'une couche de résine protectrice sur au moins une première face du substrat diélectrique, une étape de lithographie mise en oeuvre sur la couche de résine protectrice au niveau de zones données de résine, une première étape de retrait de ladite couche de résine protectrice suivant les zones données de résine, une étape de métallisation permettant l'accrochage de ladite couche de métal précieux sur ladite couche d'accroche suivant les zones données de résine une deuxième étape de retrait de la couche de résine protectrice caractérisé en ce que le procédé comprend en outre une étape de silanisation permettant l'accrochage de la couche d'accroche, réalisée soit avant l'étape de dépôt d'une couche de résine protectrice, soit entre la première étape de retrait de la couche de résine protectrice et l'étape de métallisation.

Préférentiellement, l'étape de métallisation est réalisée par évaporation ou par pulvérisation d'un métal précieux sur ladite couche d'accroche.

L'étape de lithographie peut être mise en oeuvre sous différentes formes permettant la dépolymérisation de la résine suivant des zones données de résine et selon toute l'épaisseur de la couche de résine. Chacun de ces procédés nécessite un type de résine et des étapes de retrait de la résine adaptées au procédé mis en oeuvre.

Avantageusement, l'étape de lithographie comprend une ou plusieurs lithographie(s) sélectionnée(s) dans le groupe comprenant la lithographie par nanoimpression, par faisceau d'ions focalisé, par faisceau d'électrons et par insolation optique au moyen d'un rayonnement infra-rouge, visible ou ultra-violet.

Selon un mode de réalisation préféré, le procédé selon l'invention comprend en outre -une étape de dépôt d'une couche conductrice réalisée après l'étape de dépôt d'une couche de résine protectrice et avant l'étape de lithographie et -une étape de retrait de ladite couche conductrice opérée après l'étape de lithographie et avant la première étape de retrait de la couche de résine protectrice suivant les zones données de résine, et l'étape de lithographie comprend une lithographie par faisceau d'électrons et agit sur la couche de résine protectrice par l'intermédiaire de la couche conductrice.

L'invention a également pour objet une utilisation d'une structure multicouche telle que décrite précédemment dans un appareil d'analyses optiques.

### BREVE DESCRIPTION DES FIGURES

D'autres caractéristiques, détails et avantages de l'invention ressortiront à la lecture de la description qui suit, en référence aux figures annexées, qui illustrent :
- la figure 1A, un schéma du procédé selon une variante de l'invention basé sur une lithographie par faisceau d'électrons;
- la figure 1B, un schéma de la structure multicouche obtenue par le procédé de la figure 1A ;
- la figure 2, des spectres d'extinction pour deux échantillons comprenant une couche de nanoparticules d'or et une couche d'accroche composée respectivement de MPTMS et de chrome;
- la figure 3, des spectres Raman exaltés de surface par l'intermédiaire des échantillons de la figure 2 ;
- la figure 4A, une vue de dessus d'un échantillon de structure multicouche comprenant six lignes de nanoparticules d'or adhérées sans couche d'accroche ;
- la figure 4B, l'échantillon de la figure 4A après un test de rayure ;
- la figure 5, une vue de dessus, après un test de rayure, d'un échantillon de structure multicouche comprenant quatre lignes de nanoparticules d'or adhérées avec une couche d'accroche de MPTMS :
- la figure 6, une vue de dessus, après un test de rayure, d'un échantillon de structure multicouche comprenant quatre lignes de nanoparticules d'or adhérées avec une couche d'accroche de chrome :
- la figure 7, un diagramme des topographies de surface mesurées pendant un test de rayure effectué sur l'échantillon des figures 4A et 4B ;
- la figure 8, un diagramme des topographies de surface mesurées pendant un test de rayure effectué sur l'échantillon de la figure 5 ;
- la figure 9, un diagramme des topographies de surface mesurées pendant un test de rayure effectué sur l'échantillon de la figure 6.

Pour plus de clarté, les éléments identiques ou similaires sont repérés par des signes de référence identiques sur l'ensemble des figures.

### DESCRIPTION DETAILLEE D'UN MODE DE REALISATION

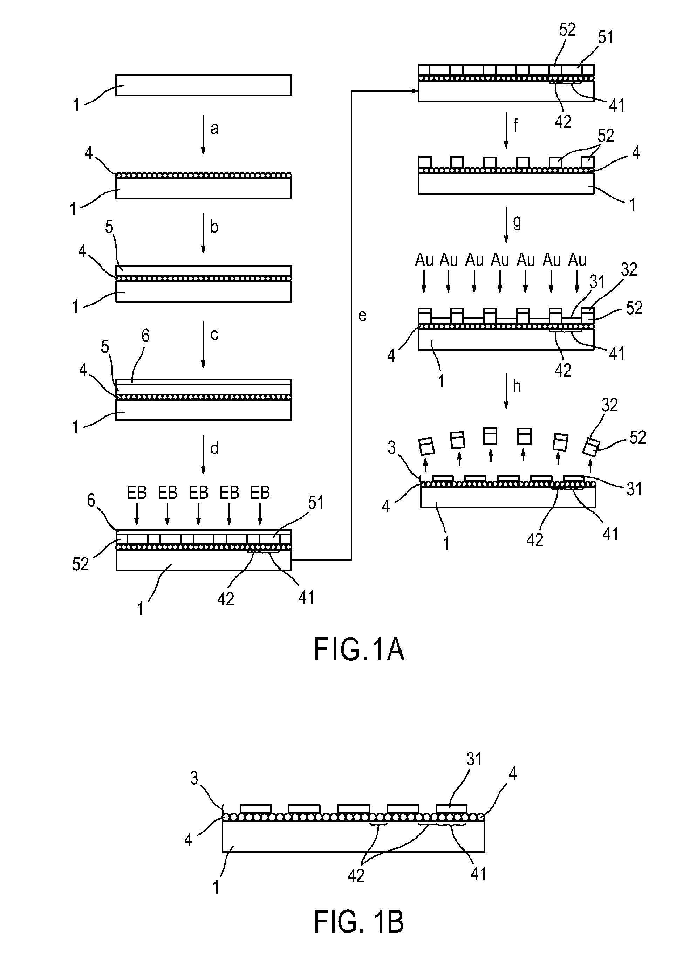

Selon la représentation de la figure 1A, le procédé selon une variante préférée de l'invention commence préférentiellement par une étape de silanisation -a- destinée à mettre en place une couche d'accroche 4 d'un dérivé alkylsilane tel que le MPTMS sur un substrat diélectrique 1 tel qu'une lame de verre.

La silanisation est connue en elle-même et par exemple décrite dans Charles A. Goss et al., Anal. Chem, 63, 85 (1991).

La silanisation commence par une immersion de lames de verre 1 pendant 30 minutes dans une solution piranha fraîchement préparée. La solution piranha est un mélange d'un volume de solution d'eau oxygénée à 30% avec trois volumes de solution d'acide sulfurique à 98%. Les lames de verre sont ensuite rincées par de l'eau distillée, séchées par un courant d'azote, puis placées sur une plaque chauffante à 100°C pendant environ 10 minutes. Après ces étapes, selon la littérature, il est considéré que les surfaces du verre présentent des groupes hydroxyles (-Si-OH). Les lames de verre prétraitées sont ensuite immergées pendant dix minutes dans une solution de silanisation portée à ébullition ; puis elles sont rincées avec suffisamment de 2-propanol, et séchées par un courant d'azote ; les lames de verres sont ensuite chauffées à 105°C pendant 10 minutes. Les étapes précédentes, effectuées sur les lames prétraitées, ont été répétées trois fois pour obtenir une couche d'accroche 4 composée de MPTMS. Il est probable que pendant ces étapes, certains groupements alcoxy du MPTMS sont dissociées de sorte à permettre des liaisons covalentes SI-O entre les atomes de silicium du MPTMS et les groupements hydroxyles de la lame de verre 1.

L'étape -a- de silanisation est suivie par une étape -b- de dépôt d'une couche de résine électrosensible 5 sur la couche d'accroche 4. Le dépôt peut-être réalisé à la tournette (spin coating). La résine est sensible aux électrons de sorte à permettre une lithographie électronique. La résine choisie est de préférence une résine de polyméthacrylate de méthyle (PMMA) mais d'autres résines connues de l'homme du métier, telle qu'une résine SU-8, peuvent être utilisées sans sortir du cadre de l'invention. La structure multicouche obtenue est ensuite précuite.

L'étape suivante est une étape -c- de dépôt d'une couche conductrice 6, constituée par exemple d'aluminium, au dessus de la résine protectrice 5. Cette étape est réalisée par évaporation de l'aluminium sur la couche de résine 4. La couche 6 d'aluminium favorise la lithographie électronique, le verre n'étant pas conducteur électrique. La couche d'aluminium obtenue mesure environ 10 nm d'épaisseur.

L'étape suivante consiste en une exposition -d- de la couche d'aluminium à un faisceau d'électron EB (dans le cas d'une lithographie par faisceau d'électrons). Lors de cette lithographie, le faisceau d'électrons est avantageusement focalisé sur des zones données de la couche d'aluminium 6 de sorte que l'ensemble desdites zones données définit un dessin, ou un motif donné. Le faisceau d'électrons EB est donc indirectement focalisé sur des zones données de résine 51 de la couche de PMMA 5 de façon à permettre ultérieurement une adhésion des structures de métal précieux 31 suivant ces zones données de résine 51 comme il sera expliqué ci-après. Les structures de métal précieux 31 ainsi accrochées définiront le même motif donné. Les parties ou zones de la résine 5 sur lesquelles le faisceau d'électron n'est pas focalisé sont illustrées sous la référence 52.

Le procédé se poursuit par une étape -e- de retrait de la couche conductrice 6. Dans le cas d'une couche conductrice en aluminium, cette étape consiste en une immersion de la structure multicouche dans de la potasse (KOH). Ensuite on effectue une étape de développement -f- par exemple par immersion dans un mélange de Méthyl-isobutyl-cétone et d'isopropanol (dite solution MIBK : IPA). Cette solution est un solvant organique connu de l'homme du métier. L'étape -f- permet d'éliminer les zones données de résine 51 situées en regard des zones données de MPTMS 41 sur lesquelles a été focalisé le faisceau d'électron EB. Les zones données de résine 52 restent attachées à la structure multicouche en regard de zones données de MPTMS 42.

L'étape suivante est une étape -g- de métallisation par évaporation du métal précieux tel que de l'or -Au- sur la couche d'accroche 4 et sur les zones données de résine 52. Cette étape aboutit à la formation d'une couche mince d'or sur la couche d'accroche 4 et sur les zones données de résine 52. Les couches d'or ainsi accrochées sur une lame de verre présente des propriétés d'adhésion élevées par rapport aux structures multicouches de l'état de la technique. Il est probable que pendant cette étape, des atomes d'or sont accrochés sur la couche d'accroche 4 par le biais de liaisons covalentes Au-S formées entre les nanoparticules d'or et fonctions thiols du MPTMS : c'est-à-dire des liaisons formées entre les atomes d'or et les atomes de soufre du MPTMS.

Le procédé se poursuit par une étape de décollage -h- réalisée par exemple en immergeant la structure multicouche dans une solution d'acétone. Après cette étape, les zones données de résine 52 et la couche d'or 32 adhérée à ces zones données de résine 52 sont décollées de la structure multicouche.

Ainsi à l'issue de ce procédé, on obtient une structure multicouche telle que représentée sur la figure 1B comprenant une couche de verre 1, une couche d'accroche 4 de MPTMS qui s'étend sur toute la surface du verre, et une couche de métal précieux 31 qui adhère sur la couche d'accroche 4 selon un motif donné, choisi par l'utilisateur selon l'application qu'il souhaite mettre en oeuvre.

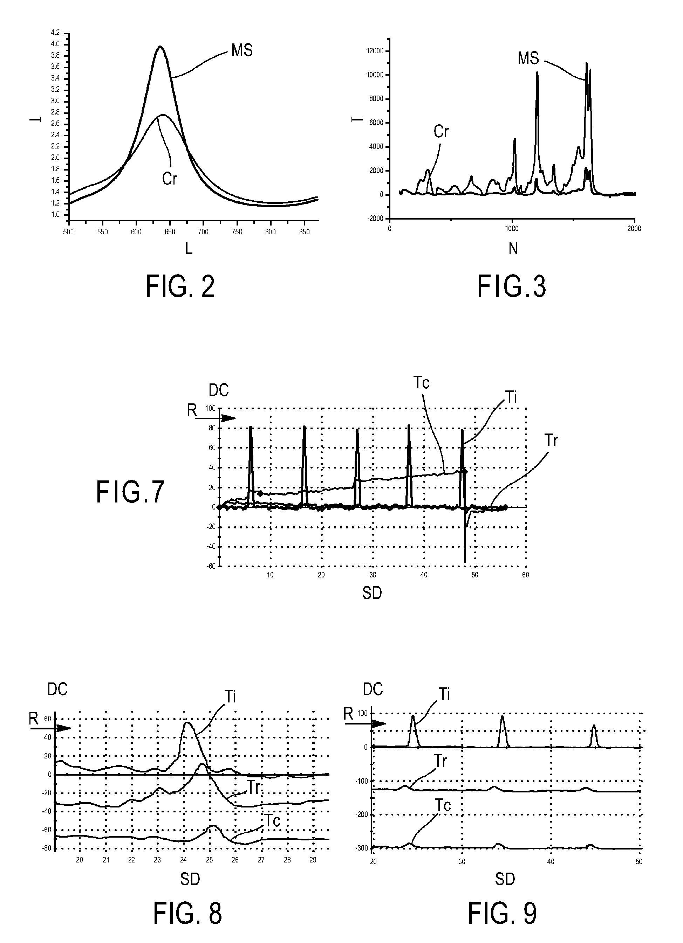

En se référant à la figure 2, des mesures de résonances plasmon ont été effectuées sur deux structures multicouches comprenant une couche de nanoparticules d'or et respectivement une couche d'accroche de MPTMS et de chrome. La figure 2 représente un graphique de l'évolution de l'intensité I de la résonance en unités arbitraires (en ordonnées) en fonction de la longueur d'onde L en nanomètre (en abscisses). La courbe MS correspond aux mesures effectuées sur la structure comprenant une couche de MPTMS ; et la courbe Cr, celle comprenant une couche de chrome. La courbe MS montre une plus grande intensité à des longueurs d'ondes comprises entre 575 nm et 675 nm. Il ressort clairement que la couche de MPTMS confère à la structure multicouche des propriétés optiques améliorées par rapport à la couche de chrome. En effet, la résonance est affinée (d'environ 25 %) et plus intense lorsque l'on utilise une couche de MPTMS, quelque soit la taille des nanoparticules utilisées. Le facteur de qualité de la résonance est donc amélioré en utilisant une telle couche.

En se référant à la figure 3, des spectres Raman de BPE exaltés ont été réalisés sur les deux structures multicouches comprenant une couche de nanoparticules d'or sous forme de cylindres de 130 nm de diamètre et respectivement une couche d'accroche de MPTMS et de chrome. L'axe des ordonnées est une échelle d'intensités I (sen unités arbitraires) et l'axe des abscisses, une échelle de nombre d'onde N (en cm⁻¹). Le spectre MS correspond à une couche d'accroche de MPTMS tandis que le spectre Cr correspond à une couche d'accroche en chrome. L'amélioration des propriétés optiques susmentionnée induit une augmentation des facteurs d'exaltation du signal Raman obtenus avec les nanoparticules sur une couche d'accroche 4 en MPTMS. Le facteur d'exaltation supplémentaire est de l'ordre de 10, soit un ordre de grandeur, entre l'utilisation du chrome et celle du MPTMS.

Cette augmentation du signal en utilisant le MPTMS comme couche d'accroche s'avère très satisfaisante, notamment pour une utilisation de ces substrats comme capteurs d'espèces chimiques ou biologiques. En effet, plus l'exaltation est forte, plus la quantité de matière détectable est faible ce qui implique une plus grande sensibilité du capteur.

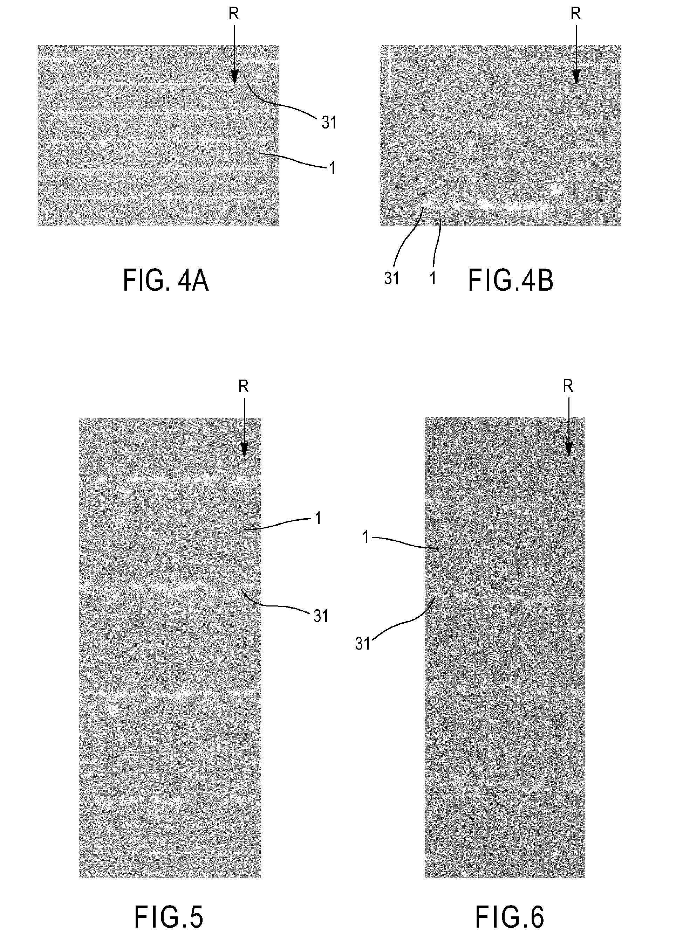

En se référant à la figure 4A, un premier échantillon est réalisé à partir d'une lame de verre 1 sur laquelle sont adhérées des nanoparticules d'or de 5 µm de longueur, 200 nm de largeur et environ 80 nm de hauteur sans couche d'accroche. Ces nanoparticules sont initialement alignées de sorte à former six lignes d'or 31 sur la lame de verre 1.

Le premier échantillon a subi un test de rayure (ou scratch test). Ce test consiste à mettre en contact une pointe telle qu'une pointe pyramidale en diamant sur la surface de l'échantillon à tester portant les lignes d'or 31. On applique une charge réglable sur cette surface, puis on déplace l'échantillon (ou la pointe) de manière à générer des rayures. La référence R illustre le sens des rayures effectuées dans le test de rayure.

Le test de rayure se déroule en trois étapes. La figure 7 illustre le résultat de ces étapes, comme explicité ci-après. D'abord la pointe mesure la topographie initiale Ti de surface en se déplaçant suivant la flèche R, à très faible charge sur l'échantillon (c'est-à-dire une force de l'ordre de 5 µN de direction perpendiculaire au plan de l'échantillon et orienté vers celui-ci) ; puis, après être revenue à son point de départ, la pointe procède à la rayure en elle-même, à charge constante (topographie Tc) ; enfin la pointe refait le trajet à nouveau, à faible charge, afin de mesurer la topographie résiduelle Tr.

Ainsi, le premier échantillon subit des rayures perpendiculaires aux lignes d'or. Chaque rayure a été effectuée à charge constante, mais différentes charges ont été appliquées, afin de déterminer la charge critique c'est-à-dire celle qui permet de décoller l'or du verre.

En se référant à la figure 4B, à l'issue du test de rayure sur l'échantillon 1, les nanoparticules d'or, qui n'étaient pas suffisamment accrochées, sont déplacées et entassées à une extrémité de la lame de verre, au niveau de la dernière ligne d'or. Ce sont les sortes d'entassement de nanoparticules 31 que l'on voit en bas de la figure 4B.

En se référant à la figure 5, un échantillon similaire au précédent mais avec une couche d'accroche de MPTMS a également subi un test de rayure. La rayure a été réalisée avec une charge constante correspondant à environ 400 µN. On voit que certaines lignes d'or ont été brisées, d'autres légèrement décalées ou déformées, mais il n'y a plus de phénomène de décollement de toute la ligne lors du déplacement de la pointe, ni d'entassement des nanoparticules en bout de course, comme c'était le cas dans la figure 4B, lorsque l'or était adhéré directement sur le verre (c'est-à-dire sans couche d'accroche).

Sur la figure 5, on remarque par ailleurs que l'or n'est pas totalement arraché par la pointe de diamant. Cette expérience permet de conclure que la charge critique avec cet échantillon est d'environ 400 µN.

En se référant à la figure 6, un autre échantillon similaire aux précédents mais avec une couche d'accroche de chrome a également subi un test de rayure. La rayure a été réalisée avec une charge constante de 6 mN. On voit que l'or a été arraché, uniquement sur le passage de la pointe. L'adhésion de l'or dans cet échantillon est comparable à celle de l'échantillon comprenant une couche de MPTMS. Cette expérience permet de conclure que la charge critique avec cet échantillon est d'environ 6 mN.

En se référant à la figure 7, pendant le test de rayure effectué sur l'échantillon des figures 4A et 4B, le déplacement de la pointe sur la structure multicouche est enregistré. L'axe des ordonnées est une échelle de déplacement (DC) en nanomètres, l'axe des abscisses est une échelle de distance de rayure (SD) en µm. La mesure de la topographie initiale Ti montre que la pointe a rencontré cinq structures d'environ 80 nm de hauteur. La rayure effectuée avec une force de 10 µN a décroché les structures d'or qui se sont entassées autour de la pointe ce qui se traduit par une topographie Tc globalement en escalier. La topographie finale est quasiment nulle, donc la rayure à 10 µN a bien tout emporté. La charge critique pour l'échantillon d'or sur verre se situe donc entre 5 et 10 µN. On retrouve donc le résultat bien connu, à savoir que l'adhérence de l'or sur le verre est très faible.

La figure 8 représente la mesure des topographies sur la troisième ligne d'or de l'échantillon de la figure 5. La topographie initiale Ti montre que la troisième ligne d'or mesure environ 60 nm de hauteur. Les rayures suivant la flèche R, à 400 µN, ont déformé la lame de verre de sorte que la mesure de ta topographie intermédiaire -Tc- est décalée à une ordonnée inférieure vers le bas. Pendant la mesure de la topographie finale, le verre a partiellement retrouvé sa forme initiale de sorte que la mesure de la topographie résiduelle Tr est également décalée, mais sensiblement identique à la mesure de la topographie initiale Ti. Ce test de rayure confirme bien que l'or n'est pas totalement arraché dans le cas d'une structure multicouche comprenant une couche de MPTMS.

La figure 9 représente la mesure des topographies sur les trois dernières lignes d'or de l'échantillon de la figure 6 selon lequel la couche d'accroche 4 en chrome est prévue. Les mesures de topographies Ti, Tc, Tr sont décalées de la même manière que celles de la figure 8. Ce test de rayure confirme bien que l'or n'est pas totalement arraché dans le cas d'une structure multicouche comprenant une couche de chrome comme couche d'accroche. Bien que l'or ne soit quasiment plus visible sur le passage de la pointe à 6 mN, on décèle encore les lignes sur la topographie finale (courbe Tr). D'autres tests ont été faits, à 10 et 15 mN. Il y est plus difficile de discerner précisément les restes de lignes d'or (environ 10 nm résiduels pour la charge de 10 mN), la pointe rayant de plus en plus profondément le verre, mais l'or n'est arraché que sur le passage de la pointe. On peut en déduire qu'en présence d'une sous-couche d'accroche de chrome, la charge critique est voisine de 6 mN. Compte tenu des charges critiques respectives, l'adhérence avec une couche d'accroche de chrome, apparaît meilleure qu'avec une couche d'accroche de MPTMS.

De nombreuses combinaisons peuvent être envisagées sans sortir du cadre de l'invention ; en particulier l'homme de métier adaptera le procédé selon l'invention à la technique de lithographie utilisée.

## Revendications

1. Structure multicouche comprenant
- un substrat diélectrique (1),
- une couche d'accroche (4) qui s'étend sur une première face du substrat diélectrique (1)
- au moins une couche de métal précieux (3,31) placée sur la couche d'accroche (4), ladite couche d'accroche (4) comprenant un dérivé d'un composé alkylsilane de formule (I)
(I) (RO)ₐ-Si-((CH2)_{c}-(XHₑ))_{b}
dans laquelle R est CH3, C2H5 ou C3H7, a vaut 2 ou 3, b vaut 4-a, c vaut de 1 à 6, e vaut 1 ou 2 et X est S ou N, la couche de métal précieux étant mise en place par évaporation ou par pulvérisation dudit métal précieux en tant que métallisation (g),
**caractérisée en ce que** la couche de métal précieux est constituée de nanoparticules qui présentent une forme et/ou un agencement et/ou une orientation déterminés.

2. Structure multicouche selon la revendication 1 **caractérisée en ce que** le substrat diélectrique comprend essentiellement du verre.

3. Structure multicouche selon l'une des revendications 1 ou 2 **caractérisée en ce que** la couche d'accroche (4) et la couche de métal précieux (3,31) s'étendent l'une et/ou l'autre sur tout ou partie de la première face du substrat diélectrique (1).

4. Structure multicouche selon l'une des revendications 1 à 3 **caractérisée en ce que** la couche de métal précieux est constituée de nanoparticules qui représentent un motif ou un dessin.

5. Structure multicouche selon l'une des revendications 1 à 4 **caractérisée en ce que** ledit composé alkylsilane est le 3-mercaptopropyltrimethoxysilane.

6. Structure multicouche selon l'une des revendications 1 à 5 **caractérisée en ce que** ledit métal précieux est l'or ou l'argent.

7. Procédé de fabrication d'une structure multicouche selon l'une des revendications 1 à 6, comprenant
(b)-une étape de dépôt d'une couche de résine protectrice sur au moins une première face du substrat diélectrique,
(d)-une étape de lithographie mise en oeuvre sur la couche de résine protectrice (5) au niveau de zones données de résine (51),
(f)-une première étape de retrait de ladite couche de résine protectrice suivant les zones données de résine (51)
(g)-une étape de métallisation permettant l'accrochage de ladite couche de métal précieux (3) sur ladite couche d'accroche (4) suivant les zones données de résine (51).
(h)- une deuxième étape de retrait de la couche de résine protectrice
**caractérisé en ce que** le procédé comprend en outre une étape (a) de silanisation permettant l'accrochage de la couche d'accroche (4), réalisée soit avant l'étape (b) de dépôt d'une couche de résine protectrice, soit entre la première étape (f) de retrait de la couche de résine protectrice et l'étape (g) de métallisation.

8. Procédé selon la revendication 7 **caractérisé en ce que** l'étape (g) de métallisation est réalisée par évaporation ou par pulvérisation d'un métal précieux sur ladite couche d'accroche (4).

9. Procédé selon l'une des revendications 7 ou 8 **caractérisé en ce que** l'étape (d) de lithographie comprend une ou plusieurs lithographie(s) sélectionnée(s) dans le groupe comprenant la lithographie par nanoimpression, par faisceau d'ions focalisé, par faisceau d'électrons et par insolation optique au moyen d'un rayonnement infra-rouge, visible ou ultra-violet.

10. Procédé selon l'une des revendications 7 à 9 **caractérisé en ce qu'**il comprend en outre
- une étape de dépôt (c) d'une couche conductrice (6) réalisée après l'étape (b) de dépôt d'une couche de résine protectrice et avant l'étape de lithographie (d) et
- une étape de retrait (e) de ladite couche conductrice (6) opérée après l'étape de lithographie (d) et avant la première étape (f) de retrait de la couche de résine protectrice suivant les zones données de résine (51), et **en ce que** l'étape (d) de lithographie comprend en une lithographie par faisceau d'électrons (EB) et agit sur la couche de résine protectrice par l'intermédiaire de la couche conductrice (6).

11. Utilisation d'une structure multicouche selon l'une des revendications 1 à 6 ou obtenue par un procédé selon l'une des revendications 7 à 10 dans un appareil d'analyses optiques.
